# EUROPÄISCHE PATENTANMELDUNG

(11) **EP 4 467 473 A1**
(43) Veröffentlichungstag der Anmeldung: **27.11.2024**
(21) Anmeldenummer: 23175044.9
(22) Anmeldetag: 24.05.2023
(51) Int. Cl.: B65B 61/24, B65G 13/07, B65G 13/075, B65G 13/12, B65B 1/00

(54) **VERTEILUNGSVORRICHTUNG**

(71) Anmelder: Somi Con Transportsysteme GmbH, 83123 Amerang (DE)
(72) Erfinder: Eder, Norbert, 83278 Traunstein (DE)
(74) Vertreter: Weickmann & Weickmann PartmbB

(57) **Zusammenfassung**

Die Erfindung betrifft eine Vorrichtung (100) zum Verteilen von losem Schüttgut in einer beutelartigen Verpackung (V), wobei die Verteilungsvorrichtung (100) eine Walzenfördereinrichtung (102) mit einer Mehrzahl von in einer Förderrichtung (F) hintereinander angeordneten Walzen (104) umfasst. Erfindungsgemäß weisen die Walzen (104) eine kreiszylindrische Gestalt auf, wobei zumindest ein Teil (104-1) der Walzen derart ausgebildet und/oder angeordnet ist, dass ein Kontaktbereich (104a-1) der Walzen (104-1), der dazu bestimmt ist, mit der Verpackung (V) in Kontakt zu treten, bezüglich einer Höhenrichtung (H), d.h. einer sowohl zur Förderrichtung (F) als auch zur Erstreckungsrichtung (B) der Walzenachsen (108) orthogonal verlaufenden Richtung, über die gesamte Länge dieser Walzen (104-1) in einer von der Höhenposition (N2') der Kontaktbereiche (104a-2) der restlichen Walzen (104-2) verschiedenen Höhenposition (N1') angeordnet ist.

## Beschreibung

Die Erfindung betrifft eine Vorrichtung zum Verteilen von losem Schüttgut in einer beutelartigen Verpackung, wobei die Verteilungsvorrichtung eine Walzenfördereinrichtung mit einer Mehrzahl von in einer Förderrichtung hintereinander angeordneten Walzen umfasst.

Gerade im Lebensmittelbereich, aber nicht ausschließlich hier, ist das Abfüllen von losem Schüttgut, beispielsweise Käseraspel, Mandelsplitter und dergleichen mehr, in Folienschlauchverpackungen weit verbreitet. Dabei wird der Folienschlauch zunächst an einem Ende verschweißt, so dass sich ein unten geschlossener, oben jedoch offener Beutel ergibt. In diesen Beutel wird dann das lose Schüttgut eingefüllt, bevor auch das obere Ende des Beutels verschlossen wird.

Aufgrund des stehenden Befüllens des Beutels befindet sich das lose Schüttgut zunächst ausschließlich am Boden des Beutels. Dies ist nachteilig, da zum Versand üblicherweise eine Mehrzahl derartiger Beutel übereinanderliegend oder aneinandergereiht stehend in einem Karton angeordnet wird. Hierzu ist es aus Gründen der Raumersparnis erforderlich, das lose Schüttgut gleichmäßig in der beutelartigen Verpackung zu verteilen. Hierzu werden die gattungsgemäßen Verteilungsvorrichtungen eingesetzt.

Aus der EP 1 273 522 A1 ist beispielsweise eine gattungsgemäße Verteilungsvorrichtung mit konischen Walzen bekannt, die bezüglich ihrer Konizität alternierend angeordnet sind. Hierdurch soll die Verpackung und damit das in dieser aufgenommene lose Schüttgut gerüttelt werden, so dass sich dieses gleichmäßig in der Verpackung verteilt. In der Praxis hat sich jedoch gezeigt, dass die bekannte Verteilungsvorrichtung den Verpackungsinhalt nicht ausreichend verteilt.

Es ist daher Aufgabe der vorliegenden Erfindung, eine Verteilungsvorrichtung mit verbessertem Verteileffekt bereitzustellen.

Diese Aufgabe wird erfindungsgemäß durch eine Verteilungsvorrichtung der eingangs genannten Art gelöst, bei welcher die Walzen eine kreiszylindrische Gestalt aufweisen, wobei zumindest ein Teil der Walzen derart ausgebildet und/oder angeordnet ist, dass ein Kontaktbereich der Walzen, der dazu bestimmt ist, mit der Verpackung in Kontakt zu treten, bezüglich einer Höhenrichtung, d.h. einer sowohl zur Förderrichtung als auch zur Erstreckungsrichtung der Walzenachsen orthogonal verlaufenden Richtung, über die gesamte Länge dieser Walzen in einer von der Höhenposition der Kontaktbereiche der restlichen Walzen verschiedenen Höhenposition angeordnet ist.

Diese unterschiedlichen Höhenpositionen der Kontaktbereiche können beispielsweise dadurch erreicht werden, dass die Walzen einen unterschiedlichen Walzendurchmesser aufweisen und/oder dass die Walzenachsen in unterschiedlichen Höhenpositionen angeordnet sind.

Aufgrund der kreiszylindrischen Gestalt der Walzen weist die Höhendifferenz der Kontaktbereiche benachbarter Walzen über deren gesamte Länge, d.h. über die gesamte Breite der Fördereinrichtung, den gleichen Wert auf. Die Stärke des Verteileffekts ist also unabhängig davon, an welcher Breitenposition der Walzenfördereinrichtung die Verpackung auf den Walzen aufliegt. Es ist nämlich das Verdienst der Erfinder, erkannt zu haben, dass die bei der gattungsbildenden Verteilungsvorrichtung auftretenden Nachteile daher rühren, dass der Höhenunterschied der Kontaktbereiche benachbarter Walzen und damit auch der Verteileffekt in der Mitte der Fördereinrichtung, also dort, wo der überwiegende Teil der Verpackungen gefördert wird, aufgrund der alternierenden Konizität der Walzen am geringsten ist, und dass nur an den Rändern der bekannten Fördereinrichtung ein nennenswerter Verteileffekt erzielt werden kann. Durch die erfindungsgemäße Verteilungsvorrichtung kann demgegenüber sichergestellt werden, dass alle Verpackungsinhalte homogen im Verpackungsbeutel verteilt werden.

Um auch in Förderrichtung für einen gleichmäßigen Verteileffekt sorgen zu können, wird vorgeschlagen, dass die Kontaktbereiche der Walzen in alternierenden Höhenpositionen angeordnet sind.

Insbesondere kann die Höhendifferenz zwischen aufeinanderfolgenden Walzen in Förderrichtung variieren. In Abhängigkeit von dem jeweiligen Verpackungsgut kann die Höhendifferenz anfänglich einen höheren Wert und später einen niedrigeren Wert aufweisen.

Dies kann beispielsweise dadurch erreicht werden, dass zumindest ein Teil der in Förderrichtung aufeinanderfolgenden Walzen, vorzugsweise alle Walzen, im Wesentlichen den gleichen Walzendurchmesser aufweist, wobei die Walzenachsen dieses Teils der Walzen jedoch alternierend in unterschiedlichen Höhenpositionen angeordnet sind.

Um für einen ausreichenden Verteileffekt sorgen zu können, wird vorgeschlagen, dass die Differenz der Höhenpositionen der Walzenachsen benachbarter Walzen zwischen etwa 10% und etwa 25% des in Förderrichtung gemessenen Abstands der Walzenachsen der benachbarten Walzen beträgt. Beispielsweise kann die Höhendifferenz der Kontaktbereiche 5 mm betragen, wenn der Abstand der Walzenachsen 35 mm beträgt.

In Weiterbildung der Erfindung kann vorgesehen sein, dass wenigstens einige der Walzen, vorzugsweise alle Walzen, deren Walzenachsen in der höchsten Höhenposition angeordnet sind, drehangetriebene Walzen sind. Dabei kann sogar vorgesehen sein, dass nur diese Walzen drehangetriebene Walzen sind, während alle anderen Walzen freilaufende Walzen sein können.

Um die Drehung der Walzen reproduzierbar in eine gewünschte Förderbewegung der Verpackungen überführen zu können, wird ferner vorgeschlagen, dass die Oberfläche wenigstens eines Teils der Walzen mit einem reibungserhöhenden Oberflächenüberzug versehen ist. Der Oberflächenüberzug kann beispielsweise von einem Überzug aus Kunststoff, Gummi oder dergleichen gebildet sein. Alternativ kann der Reibwert zwischen Walze und Verpackungsbeutel auch durch eine Oberflächenbehandlung der oberen, angetriebenen Walzen, beispielsweise durch Sandstrahlen, verbessert werden.

Die ideale Drehzahl und/oder das Oberflächenmaterial und/oder die Oberflächenbeschaffenheit der Walzen für eine möglichst hohe homogene Verteilung des Schüttguts im Verpackungsbeutel ist von mehreren Faktoren abhängig, beispielsweise den Eigenschaften des Produktes, den Eigenschaften des Verpackungsbeutels und von der Geschwindigkeit der Walzen. Daher ist es vorteilhaft, wenn die Geschwindigkeit der Walzen einstellbar ist. Typischerweise kann die Geschwindigkeit der Walzen derart gewählt werden, dass sich eine Fördergeschwindigkeit der Verpackungsbeutel in der Größenordnung von etwa 20 m/min ergibt.

Aus Sicherheitsgründen wird vorgeschlagen, dass die Abstände der Walzenachsen und die Walzendurchmesser derart gewählt und aufeinander abgestimmt sind, dass keiner der Spalte zwischen zwei benachbarten Walzen in Förderrichtung mehr als 4 mm beträgt.

Die gleichmäßige Verteilung des losen Schüttguts in der Verpackung kann ferner dadurch begünstigt werden, dass die Fördereinrichtung in Förderrichtung ansteigend angeordnet ist, wobei der Neigungswinkel der Fördereinrichtung vorzugsweise höchstens 25°, bevorzugter höchstens 15°, beträgt. Der jeweils eingesetzte Neigungswinkel hängt dabei beispielsweise von den Eigenschaften des losen Schüttguts ab, insbesondere der inneren Reibung bzw. Haftung des Schüttguts, also der Reibung bzw. Haftung der einzelnen Schüttgutpartikel gegen- bzw. aneinander. Je stärker die innere Reibung bzw. Haftung ist, desto größer sollte der Neigungswinkel sein. Beispielsweise haben Käseraspel eine höhere innere Haftung als Mandelsplitter.

In Weiterbildung der Erfindung kann ferner in einem in Förderrichtung hinteren Längenabschnitt der Walzenfördereinrichtung oberhalb der Walzenfördereinrichtung eine Drückeinrichtung vorgesehen sein, welche zusammen mit einer Walzenfördereinrichtung einen sich in Förderrichtung verjüngenden Durchlaufspalt bildet. Während die Beutel mit dem darin aufgenommenen Schüttgut den Durchlaufspalt durchlaufen, wirkt die Drückeinrichtung von oben auf das durch den Verteileffekt in Bewegung versetzte Schüttgut ein, was aufgrund der Verjüngung des Durchlaufspalts eine weitere Egalisierung des Schüttguts in dem Beutel nach sich zieht.

Nachzutragen ist, dass die Kontaktbereiche selbstverständlich keine festen Oberflächenbereiche der Walzen sind, sondern von der jeweiligen Drehstellung der Walzen unabhängige Bereiche bezeichnen, die der Verpackung jeweils zugewendet angeordnet sind.

Die Erfindung wird im Folgenden mit Bezug auf die beigefügte Zeichnung anhand von Ausführungsbeispielen näher erläutert werden. Es stellt dar:
- Figur 1: eine perspektivische Ansicht einer Ausführungsform einer erfindungsgemäßen Vorrichtung zum Verteilen von losem Schüttgut in einer beutelartigen Verpackung;
- Figur 2: eine teilweise geschnittene Seitenansicht der Ausführungsform der Figur 1;
- Figur 3: eine schematische Seitenansicht der Walzenanordnung der Ausführungsform der Figur 1; und
- Figur 4: eine Ansicht ähnlich Figur 3 einer abgewandelten Ausführungsform.

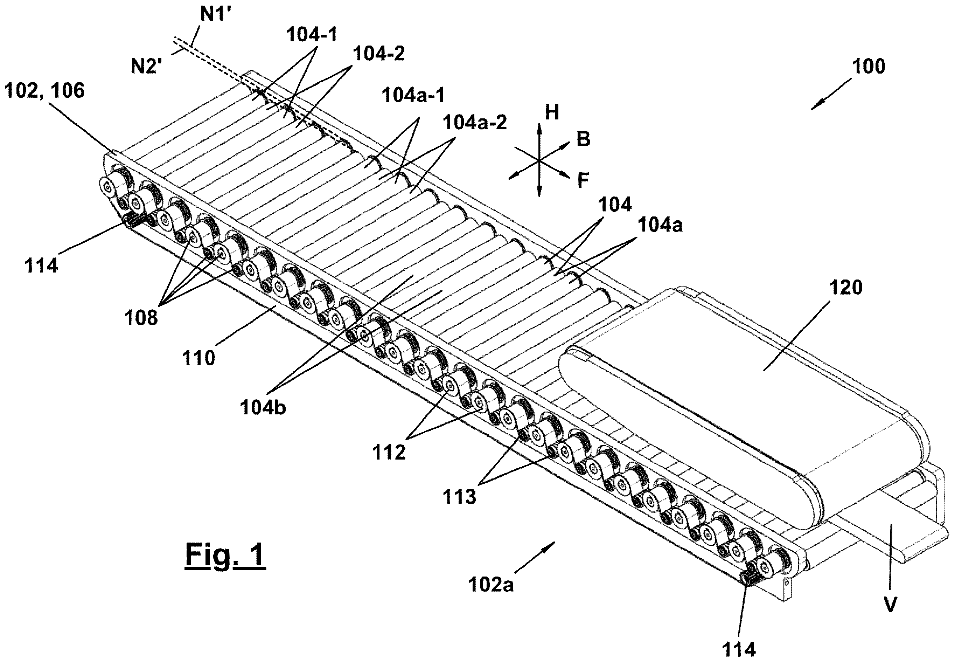

In Figur 1 ist eine erfindungsgemäße Vorrichtung zum Verteilen von losem Schüttgut in einer beutelartigen Verpackung ganz allgemein mit 100 bezeichnet. Die Verteilungsvorrichtung 100 umfasst eine Walzenfördereinrichtung 102 mit einer Mehrzahl von in einer Förderrichtung F hintereinander angeordneten Walzen 104. Die Walzen 104 sind an einem Rahmen 106 der Walzenfördereinrichtung 102 um Achsen 108 drehbar gelagert, die sich in einer zur Förderrichtung F orthogonal verlaufenden Breitenrichtung B erstrecken.

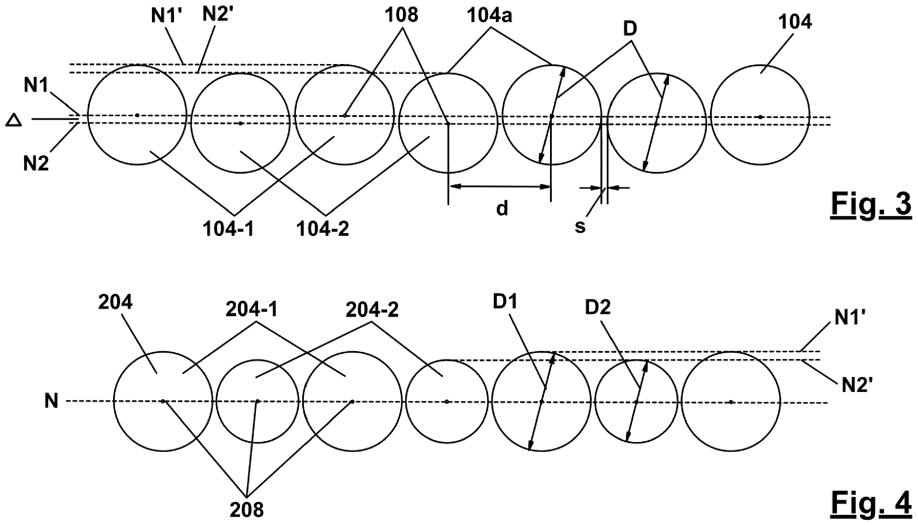

In dem Ausführungsbeispiel der Figuren 1 bis 3 weisen die Walzen 104 eine kreiszylindrische Gestalt auf, wobei alle Walzen 104 im Wesentlichen den gleichen Walzendurchmesser D haben (siehe Figur 3). Allerdings sind die Drehachsen 108 der Walzen 104 in einer sowohl zur Förderrichtung F als auch zur Achsrichtung B orthogonal verlaufenden Höhenrichtung H auf unterschiedlichen Niveaus N1 und N2 angeordnet. Und zwar sind die Drehachsen 108 einer ersten Gruppe von Walzen 104-1 auf einem Höhenniveau N1 angeordnet, während die Drehachsen 108 einer zweiten Gruppe von Walzen 104-2 auf einem Höhenniveau N2 angeordnet. Dies hat zur Folge, dass auch die Kontaktbereiche 104a der Walzen 104, die dazu bestimmt ist, mit der Verpackung V in Kontakt zu treten, auf unterschiedlichen Höhenniveaus N1' und N2` angeordnet sind, nämlich die Kontaktbereiche 104a-1 der Walzen 104-1 auf dem Niveau N1' und die Kontaktbereiche 104a-2 der Walzen 104-2 auf dem Niveau N2'.

Im Ausführungsbeispiel der Figuren 1 bis 3 sind die Walzen 104-1 und 104-2 in Förderrichtung F alternierend angeordnet, so dass sich bei der Bewegung der Verpackung V in Förderrichtung F ein auf die Verpackung V einwirkender Verteileffekt ergibt, der das in der Verpackung V aufgenommene lose Schüttgut gleichmäßig in ihr verteilt. Zur Erzielung eines ausreichend starken Verteileffekts kann die Differenz Δ der Höhenpositionen N1 und N2 der Walzenachsen 108 benachbarter Walzen 104-1, 104-2 zwischen etwa 10% und etwa 25% des in Förderrichtung gemessenen Abstands d der Walzenachsen 108 dieser Walzen 104-1, 104-2 betragen.

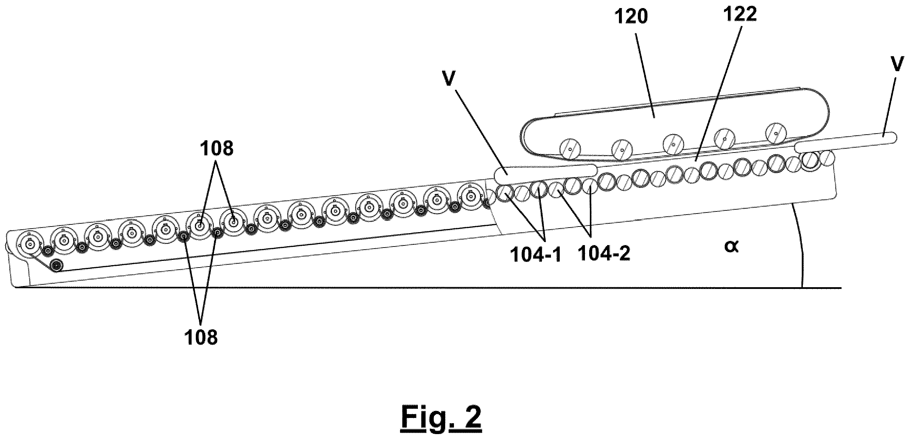

Wie in den Figuren 1 und 2 dargestellt ist, sind lediglich die "oberen" Walzen 104-1 drehangetrieben, während die "unteren" Walzen 104-2 freilaufende Walzen sind. Hierzu ist ein Antriebsriemen 110, der vorzugsweise als Zahnriemen ausgebildet ist, um Ritzel 112 herumgeführt, die auf den Achsen 108 der "oberen" Walzen 104-1 angebracht sind, während die glatte Rückseite des Antriebsriemens 110 um die die am Rahmen 106 befestigten Umlenkrollen 113 der Antriebsachsen der "unteren" Walzen 104-2 herumgeführt sind. Für den Antrieb des Antriebsriemens 110 steht dieser mit Antriebsritzeln 114 in Verbindung, die von einem (nicht dargestellten) Elektromotor angetrieben werden.

Da die Walzen 104 über ihre gesamte Erstreckung in Breitenrichtung B den gleichen Kreisdurchmesser aufweisen, ist der Verteileffekt stets gleich stark, und zwar unabhängig davon, auf welcher Breitenposition die jeweilige Verpackung gefördert wird.

Zur Verbesserung der Förderung der Verpackungen V kann die Oberfläche wenigstens eines Teils der Walzen 104 mit einem reibungserhöhenden Oberflächenüberzug 104b versehen sein, wie in Figur 1 für einen Bereich einer Walze 104 beispielhaft angedeutet ist. Der Oberflächenüberzug 104b kann beispielsweise von einem Überzug aus Kunststoff, Gummi oder dergleichen gebildet sein. Alternativ kann die Oberfläche der angetriebenen Walzen 104-1 auch oberflächenbehandelt sein, beispielsweise mittels Sandstrahlen.

Aus Sicherheitsgründen sind die Abstände d der Walzenachsen 108 und die Walzendurchmesser D derart gewählt und aufeinander abgestimmt, dass keiner der Spalte s zwischen zwei benachbarten Walzen 104-1, 104-2 in Förderrichtung F mehr als 4 mm beträgt.

Um der inneren Reibung bzw. Haftung des losen Schüttguts in der Verpackung V Rechnung tragen zu können, also der Reibung bzw. Haftung der einzelnen Schüttgutpartikel gegen- bzw. aneinander, kann die Fördereinrichtung 102 in Förderrichtung F ansteigend angeordnet sein, was in Figur 2 durch den Winkel α angedeutet ist. Je stärker die innere Reibung bzw. Haftung ist, desto größer sollte der Neigungswinkel α sein. Beispielsweise haben Käseraspel eine höhere innere Haftung aneinander als Mandelsplitter.

In Weiterbildung der Erfindung kann ferner in einem in Förderrichtung F hinteren Längenabschnitt 102a der Walzenfördereinrichtung 102 eine Drückeinrichtung 120 vorgesehen sein, welche zusammen mit der Walzenfördereinrichtung 102 einen sich in Förderrichtung F verjüngenden Durchlaufspalt 122 bildet (siehe Figur 2). Während die Verpackung V mit dem darin aufgenommenen Schüttgut den Durchlaufspalt 122 durchläuft, wirkt die Drückeinrichtung 120 von oben auf das durch den Verteileffekt in Bewegung versetzte Schüttgut ein, was aufgrund der Verjüngung des Durchlaufspalts 122 eine weitere Egalisierung des Schüttguts in dem Beutel nach sich zieht.

In Figur 4 ist eine Figur 3 ähnliche schematische Seitenansicht der Walzen einer zweiten Ausführungsform der erfindungsgemäßen Verteilungsvorrichtung dargestellt. Da die Ausführungsform der Figur 4 im Wesentlichen der Ausführungsform der Figuren 1 bis 3 entspricht, wurden in Figur 4 die gleichen Bezugszeichen verwendet wie in den Figuren 1 bis 3, jedoch vermehrt um die Zahl 100. Zudem wird die Ausführungsform der Figur 4 im Folgenden nur insoweit beschrieben, als sie sich von der Ausführungsform der Figuren 1 bis 3 unterscheidet, auf deren Beschreibung hiermit ansonsten ausdrücklich verwiesen wird.

Anhand der Ausführungsform der Figur 4 soll erläutert werden, dass die unterschiedlichen Höhenniveaus N1' und N2' der Walzen 204 auch dadurch erzielt werden können, dass die Walzen 204 einen unterschiedlichen Durchmesser aufweisen, nämlich die dem Höhenniveau N1' zugeordneten Walzen 204-1 einen größeren Durchmesser D1 und die dem Höhenniveau N2` zugeordneten Walzen 204-2 einen größeren Durchmesser D2. Ergänzend sei darauf hingewiesen, dass die Walzenachsen 208 in dem Ausführungsbeispiel der Figur 4 alle auf dem gleichen Höhenniveau N angeordnet sind, was durch die unterschiedlichen Durchmesser D1 und D2 ermöglicht wird.

Grundsätzlich ist es jedoch auch denkbar, dass die unterschiedlichen Höhenniveaus N1' und N2' sowohl durch unterschiedliche Höhenniveaus N1 und N2 der Walzenachsen als auch durch unterschiedliche Walzendurchmesser D1 und D2 erzielt werden.

## Patentansprüche

1. Vorrichtung (100) zum Verteilen von losem Schüttgut in einer beutelartigen Verpackung (V), wobei die Verteilungsvorrichtung (100) eine Walzenfördereinrichtung (102) mit einer Mehrzahl von in einer Förderrichtung (F) hintereinander angeordneten Walzen (104) umfasst, **dadurch gekennzeichnet, dass** die Walzen (104) eine kreiszylindrische Gestalt aufweisen, wobei zumindest ein Teil (104-1) der Walzen derart ausgebildet und/oder angeordnet ist, dass ein Kontaktbereich (104a-1) der Walzen (104-1), der dazu bestimmt ist, mit der Verpackung (V) in Kontakt zu treten, bezüglich einer Höhenrichtung (H), d.h. einer sowohl zur Förderrichtung (F) als auch zur Erstreckungsrichtung (B) der Walzenachsen (108) orthogonal verlaufenden Richtung, über die gesamte Länge dieser Walzen (104-1) in einer von der Höhenposition (N2`) der Kontaktbereiche (104a-2) der restlichen Walzen (104-2) verschiedenen Höhenposition (N1') angeordnet ist.

2. Verteilungsvorrichtung nach Anspruch 1,
**dadurch gekennzeichnet, dass** die Walzen (204) einen unterschiedlichen Walzendurchmesser (D1, D2) aufweisen und/oder dass die Walzenachsen (108) in unterschiedlichen Höhenpositionen (N1, N2) angeordnet sind.

3. Verteilungsvorrichtung nach Anspruch 1 oder 2,
**dadurch gekennzeichnet, dass** die Kontaktbereiche (104a-1, 104a-2) der Walzen (104) in alternierenden Höhenpositionen (N1', N2') angeordnet sind.

4. Verteilungsvorrichtung nach einem der Ansprüche 1 bis 3,
**dadurch gekennzeichnet, dass** zumindest ein Teil der in Förderrichtung (F) aufeinanderfolgenden Walzen (104), vorzugsweise alle Walzen (104), im Wesentlichen den gleichen Walzendurchmesser (D) aufweist, wobei die Walzenachsen (108) dieses Teils der Walzen (104) jedoch alternierend in unterschiedlichen Höhenpositionen (N1, N2) angeordnet sind.

5. Verteilungsvorrichtung nach Anspruch 4,
**dadurch gekennzeichnet, dass** die Differenz (Δ) der Höhenpositionen )N1, N2) der Walzenachsen (108) benachbarter Walzen (104-1, 104-2) zwischen etwa 10% und etwa 25% des in Förderrichtung (F) gemessenen Abstands (d) der Walzenachsen (108) der benachbarten (104-1, 104-2) Walzen beträgt.

6. Verteilungsvorrichtung nach Anspruch 4 oder 5,
**dadurch gekennzeichnet, dass** wenigstens einige der Walzen (104-1), vorzugsweise alle Walzen (104-1), deren Walzenachsen (108) in der höchsten Höhenposition (N1) angeordnet sind, drehangetriebene Walzen sind, wobei vorzugsweise nur diese Walzen (104-1) drehangetriebene Walzen sind, während alle anderen Walzen (104-2) freilaufende Walzen sind.

7. Verteilungsvorrichtung nach einem der Ansprüche 1 bis 6,
**dadurch gekennzeichnet, dass** die Oberfläche wenigstens eines Teils der Walzen (104) mit einem reibungserhöhenden Oberflächenüberzug (104b) versehen oder oberflächenbehandelt ist, beispielsweise durch Sandstrahlen ist.

8. Verteilungsvorrichtung nach einem der Ansprüche 1 bis 7,
**dadurch gekennzeichnet, dass** die Abstände (d) der Walzenachsen (108, 208) und die Walzendurchmesser (D1, D2) derart gewählt und aufeinander abgestimmt sind, dass keiner der Spalte (s) zwischen zwei benachbarten Walzen in Förderrichtung (F) mehr als 4 mm beträgt.

9. Verteilungsvorrichtung nach einem der Ansprüche 1 bis 8,
**dadurch gekennzeichnet, dass** die Fördereinrichtung (102) in Förderrichtung (F) ansteigend angeordnet ist, wobei der Neigungswinkel (α) der Fördereinrichtung (102) vorzugsweise höchstens 25°, bevorzugter höchstens 15°, beträgt.

10. Verteilungsvorrichtung nach einem der Ansprüche 1 bis 9,
**dadurch gekennzeichnet, dass** in einem in Förderrichtung (F) hinteren Längenabschnitt (102a) der Walzenfördereinrichtung (103) oberhalb der Walzenfördereinrichtung (102) eine Drückeinrichtung (120) vorgesehen ist, welche zusammen mit einer Walzenfördereinrichtung (102) einen sich in Förderrichtung (F) verjüngenden Durchlaufspalt (122) bildet.
